# EUROPEAN PATENT APPLICATION

(11) **EP 1 598 142 A1**
(43) Date of publication of application: **23.11.2005**
(21) Application number: 05104317.2
(22) Date of filing: 20.05.2005
(51) Int. Cl.: B23K 35/26, C22C 13/02

(54) **Lead-free solder alloy and preparation thereof**

(30) Priority: 20.05.2004 JP 2004178994
(71) Applicant: Theresa Institute Co., Ltd., Tokorozawa-shi, Saitama 359-0027 (JP)
(72) Inventor: Hasegawa, Masayuki, Theresa Institute Co., Ltd., Saitama,359-0027 (JP)
(74) Representative: Staudt, Hans-Peter

(57) **Abstract**

This invention relates to a lead-free solder alloy including 1 to 16 percent by weight of Bi, 0.01 to 2 percent by weight of Sb, 0.001 to 2 percent by weight of Co, and the balance percent of Sn, so as to make the individual amounts of Bi, Sb, Co and Sn summing up to 100% by weight, in which Sb is substantially present as a solid solution with Bi. The alloy is prepared by solidifying a melt obtained by melting Bi together with Sb to give a mother alloy of Bi and Sb, i.e. the solid solution of Bi and Sb, and then solidifying a melt obtained by melting the mother alloy of Bi and Sb together with Sn and Co. The lead-free solder alloy according to the present invention has high tensile strength and low melting temperature. Furthermore, the alloy displays improved performance in practical characteristics such as wettability, thermal shock resistance, and is inexpensive.

## Description

### BACKGROUND OF THE INVENTION

### 1. Field of the Invention

The present invention relates to a lead-free solder alloy having a melting point lower than about 210°C and more specifically, to the lead-free solder alloy displaying improved performance in practical characteristics such as wettability and thermal shock resistance.

### 2. Discussion of the Ralated Art

In manufacturing electric or electronic products, electronic elements are generally fixed on circuit substrates using a solder alloy of Sn and Pb having a liquefying temperature (i.e., the temperature at which a solder alloy completely melts) of 183°C. However, the use of Pb causes the pollution of the environment Furthermore, Pb cumulates in the human body. Therefore, the conventional Sn-Pb solder alloy should be replaced with lead-free alloys.

Common lead-free solder alloys are in general divided into the following groups:
(i) High-temperature alloys: ex. Sn-Cu-P (liquefying temp. 227°C)
(ii) Middle-temperature alloys: ex. Sn-Ag-Cu (liquefying temp. 217°C)
(iii) Low-temperature alloys: ex. Sn-Zn-Bi (liquefying temp. 199°C).

The high-temperature alloys and the middle-temperature alloys have liquefying temperatures higher than that of the Sn-Pb alloy. Therefore, particular equipments are generally required to solder at high temperatures in a working environment of N₂. Furthermore, these alloys may damage circuit substrates and electronic elements, in particular those having insufficient heat resistance, during soldering. In addition, these alloys are expensive, since they include costly Ag and Cu.

The low-temperature alloys do not have the above-mentioned problems. However, the Sn-Zn-Bi alloy is not suitable to solder circuit substrates or electronic elements including Ni. In this case, Zn is primarily corroded due to the difference between electrode potentials of Zn and Ni. This results in defective soldering. The corrosion of Zn accelerates in the presence of moisture and residual agents in the circuit substrates or the electronic elements. Therefore, the reliability of soldering may be influenced not only by qualities of circuit substrates and electronic elements to be used but by the moisture in the air. In particular, the corrosion of Zn is a serious problem in complex electronic products such as personal computers for which thousands of electronic elements have to be fixed on both sides of a circuit substrate.

On the other hand, a Sn-Bi alloy without Zn can be used to avoid the above-mentioned problem. However, the use of the Sn-Bi alloy causes another problem. The Sn·Bi ally has an eutectic temperature of 137°C. In an electronics including a circuit substrate on which thousands of electronic elements are fixed, a temperature of the substrate rises above 100°C, locally up to about 140°C, during the operation of the electronics. Therefore, the Sn-Bi alloy can partially melt at the above-mentioned temperature. This results in poor electric contact in the marketplace.

Therefore, new low temperature lead free alloys, which do not have the problems described above, have been requested.

JP06-844180A discloses a solder alloy including 0.05 to 5.0 percent by weight of Co and the balance of Sn and having intermetallic compounds of Sn and Co dispersed in a matrix of Sn. The intermetallic compounds strengthen the structure of the solder alloy and thus tensile strength of the alloy. The document also describes that the addition of any of Sb, Bi, In, Ag and Ga in the amount less than 5.0 percent by weight, or two kinds of Sb, Bi, In, Ag and Ga in the total amount less than 7.0 percent by weight adjusts a melting point of the alloy in the range from 190 to 200°C and that the resulting low temperature alloy also has high tensile strength.

JP08-224689A discloses that a solder alloy having particulate structure is obtained by adding 0.01 to 5 percent by weight of Co into a low temperature lead free alloy including 0.1 to 57 percent by weight of Bi or 0.1 to 50 percent by weight of In and the balance of Sn and ordinary impurities, and that intermetallic phases of fine particles is obtained after Cu, Ni, Au and alloys thereof are wetted. The intermetallic phases increase joint strength of a soldered component.

Therefore, it is known from the above documents that the addition of Co provides the solder alloys having particulate structures which increase the tensile strength of the alloys, and that melting temperatures of the alloys can be lowered by the addition of Sb, Bi, In, Ag or Ga. However, the above documents are silent about other practical performance of the disclosed alloys.

In general, the followings are requested to a solder alloy in practical use, in addition to the lowered melting point and the high tensile strength.

As a basic practical performance, the solder alloy has to wet metallic electrodes of electronic elements and circuit substrates to be used, and widely spreads on the electrodes after the soldering. That is, a spreading rate of the solder alloy (i.e. the rate of an electrode surface area covered with a solder alloy to the whole electrode surface area) has to be high. Low spreading rate decreases the reliability of soldering. In particular, the high spreading rate is important in manufacturing electronic products which include circuit substrates having thousands of electronic elements.

It is also requested that the alloy does not include alloy phases having too low melting temperature. Such phases may begin to melt as a temperature of a circuit substrate rises. This decreases the tensile strength of the alloy.

Furthermore, it is desired that a liquefying temperature of the alloy is almost equal to a solidifying temperature (i.e. the temperature at which a solder alloy is completely solidified). Soldered circuit substrates are generally transported on a conveyor belt. If the solder alloy has the liquefying temperature quite different from the solidifying temperature, it takes a long time to completely solidify the alloy after soldering. In such a case, crack initiation in the alloy or solder separation from the substrates may be caused by the vibration of the conveyor belt during the transportation.

When electronic elements are soldered on circuit substrates, or when the soldered substrates are cooled after soldering, or during the operation of electronics into which the substrates are incorporated, significant thermal shock acts on soldered parts because thermal expansion coefficients of the electronic elements, the circuit substrate and the solder alloy used are in general different. The thermal shock may result in crack formation in the alloys. Therefore, thermal shock resistance is one of the important demand characteristics.

In addition, it is desired that the solder alloy is inexpensive from an economical standpoint.

### OBJECT AND SUMMARY OF THE INVENTION

It is therefore an object of the present invention to provide a lead-free solder alloy having a lowered liquefying temperature and displaying improved performance in practical characteristics such as tensile strength, wettability and thermal chock resistance.

It is another object of the present invention to provide the lead-free solder alloy which is possible to replace the conventional Sn·Pb alloy.

It is still another object of the invention to provide the lead-free solder alloy which is inexpensive.

The above objects are achieved by a lead-free solder alloy comprising 1 to 15 percent by weight of Bi, 0.01 to 2 percent by weight of Sb, 0.001 to 2 percent by weight of Co; and the balance percent by weight of Sn, so as to make the individual amounts of Bi, Sb, Co and Sn summing up to 100% by weight, Sb being substantially present as a solid solution with Bi. The formation of a Sn-Bi alloy phase, which can melt at a low temperature (137°C), is avoided by the formation of the sold solution of Sb and Bi according to the present invention.

If the amount of Co is lees than 0,001 percent by weight, tensile strength of the alloy would decrease. If the amount of Co is more than 2 percent by weight, the liquefying temperature would increase and also wettability of the alloy would deteriorate. If the amount of Bi is less than 1 percent by weight, the liquefying temperature of the alloy would increase and improving thermal shock resistance can little take effect. If the amount of Bi is more than 15 percent by weight, the undesired Sn-Bi ally phase can be formed because the components segregate during the solidification of the alloy. If the amount of Sb is less than 0.01 percent by weight, preventing the decrease in the liquefying temperature caused by the formation of the undesired Sn-Bi alloy phase can little take effect. If the amount of Sb is more than 2 percent by weight, the liquefying temperature would increase and also the wettability would deteriorate.

The content of Co in the solder alloy according to the invention is preferably 0.005 to 1 percent by weight, in particular 0.01 to 0.05 percent by weight, The content of Bi in the solder alloy according to the mention is preferably 8 to 15 percent by weight, in particular 10 to 16 percent by weight The content of Sb in the solder alloy according to the invention is preferably 0-05 to 2 percent by weight, in particular 0.1 to 2 percent by weight.

In preparing the solder alloy amording to the invention, Bi has to be previously melted together with Sb to give a mother alloy of Bi and Sb, i.e. the solid solution of Bi and Sb. The mother alloy of Bi and Sb is hereinafter referred as a Bi/Sb mother alloy. If Bi is directly melted together with Sn, the undesired Sn Bi alloy phase, which can melt at a low temperature (137°C), is formed.

Therefore, the present invention also relates to a process of preparing the novel lead-free solder alloy, comprising solidifying a melt obtained by melting Bi together with Sb to give the Bi/Sb mother allay and solidifying a melt obtained by melting the Bi/Sb mother alloy together with Sn and Co.

In a preferred embodiment, the solder alloy according to the invention is prepared by a process, comprising solidifying a melt obtained by melting Bi together with Sb to give the Bi/Sb mother alloy, solidifying a melt obtained by melting Sn together with Co to give a mother alloy of Sn and Co (it is hereinafter referred as a Sn/Co mother alloy), and solidifying a melt obtained by melting Sn together with the Bi/Sb mother alloy and the Sn/Co mother alloy. The melting point of Co is about 1480°C. Therefore, huge amount of energy is consumed in directly melting Co together with Sn and the Bi/Sb mother alloy. On the contrary, the Sn/Co mother alloy can be formed at about 550°C. The novel solder alloy according to the invention can be prepared using lesser energy in this embodiment.

### DETAILED DESCRIPTION OF THE INVENTION

The present invention will be described in further detail below.

The solder alloy according to the present invention comprises Sn, Bi, Sb and Co as essential components. In the solder alloy, Sb is substantially present as a solid solution with Bi.

When Sn and Bi are mixed together, a eutectic Sn-Bi alloy which melts at a eutectic temperature (137°C) is formed. If such a Sn-Bi alloy phase is included in a solder alloy, the alloy phase begins to melt at the eutectic temperature (137°C) as a temperature of a substrate rises to about 140°C during the operation of electronics. This may decrease tensile strength of the solder alloy. On the other hand, Bi and Sb together form a complete solid solution. This solution has a melting temperature between 271°C and 630°C. The melting tempemture of 271°C is obtained in the solid solution having 0 percent by weight of Sb (i.e, pure Bi). The melting temperature of 630°C is obtained in the solid solution having 0 percent by weight of Bi (i.e. pure Sb). The solid solution does not melt if the temperature of the substrate rises to about 140°C. According to the invention, Sb is substantially present as the solid solution with Bi to avoid the formation of the undesired Sn-Bi alloy phase which begins to melt at the low temperature (137°C).

In the solder alloy according to the invention, Sb is included in the amount of 0.01 to 2 percent by weight, based on the total mass of the alloy. The componet Sb serves to avoid the formation of the undesired Sn-Bi alloy phase as mentioned above and to improve the wettability as welt. Sb also serves to improve the elongation of the alloy and to improve the joint strength of the soldered parts between electronic elements and circuit substrates. If the amount of Sb is less than 0.01 percent by weight, preventing the decrease of the liquefying temperature caused by the formation of the Sn-Bi alloy phase can little take effect. On the contrary, if the amount of Sb is more than 2 percent by weight, the liquefying temperature would increase and also the wettability and the spreading rate would deteriorate. The amount of Sb in the novel solder alloy is preferably 0.05 to 2 percent by weight, in particular 0.1 to 2 percent by weight.

In the solder alloy according to the invention, Bi is included in the amount of 1 to 15 percent by weight, based on the total mass of the alloy. The component Bi serves to adjust the liquefying temperature and to improve the thermal shock resistance of the alloy as well. It is considered that the thermal shock resistance is improved because Bi relieves thermal expansion/contraction of Sn, Sn has the volume change of 4.21 % when a melt of it is solidified and then cooled to the room temperature. On the other hand, Bi has the corresponding volume change of - 2.81 %. These adverse volume changes are effective in improving the thermal shock resistance. If the amount of Bi is less than 1 percent by weight, the Liquefying temperature of the alloy would increase and improving the thermal shock resistance can little take effect. On the contrary, if the amount of Bi is more than 15 percent by weight, the undesired Sn-Bi ally phase can be formed because the components segregate during the solidification of the alloy. The amount of Bi in the novel solder alloy is preferably 8 to 15 percent by weight, in particular 10 to 15 percent by weight.

In the solder alloy according to the invention, the component Co is included in the amount of 0.001 to 2 percent by weight, based on the total mess of the alloy. During the solidification of the alloy, Co firstly precipitates to give crystal nuclei, and the remainder solidifies around the nuclei to give the fine particulate structure of the alloy. The particulate structure gives a uniform composition in the alloy and strengthens the tensile strength. If the amount of Co is less than 0.001 percent by weight, the particulate structure of the alloy would become large and the tensile strength would deteriorate. On the contrary, if the amount of Co is more than 2 percent by weight, the liquefying temperature would increase and also the wettability and the spreading rate would deteriorate. The amount of Co in the novel solder alloy is preferably, 0,045 to 1 percent by weight, in particular 0.01 to 0.05 percent by weight.

The novel solder alloy can comprise unavoidable impurities. Examples of the impurities are Cu, Fe, Al, Zn, As, Cd, Ag and Pb, etc.

In preparing the solder alloy according to the invention, it is very important to previously melt Bi together with Sb to give the Bi/Sb mother alloy. If Bi and Sb are separately molted together with Sn, the Sn-Bi alloy and a Sn-Sb alloy are prepared. The formation of the Sn Bi alloy phase should be avoided, because the alloy melts at a low temperature (137°C) as mentioned above.

Therefore, the novel solder alloy is prepared by the process comprising solidifying a melt obtained by melting Bi together with Sb to give the Bi/Sb mother alloy and solidifying a melt obtained by melting the Bi/Sb mother alloy together with Sn and Co. The Bi/Sb mother alloy is generally formed by melting Bi metal together with Sb metal. If desired, an alloy having Bi and Sb in the amounts different from those in the aimed mother alloy can be mixed to the metals. Also, Sn metal and Co metal are in general used in the process. If desired, an alloy having Sn and Co can be mixed to the metals. In the process, these components can be mixed as solids and then the mixture is melted, or one component can be firstly melted and the remaining components are added into the resulting melt.

In preparing the novel solder alloy, there is no strict limitation in the order of adding Co. Co can be melted together with the Bi/Sb mother alloy to give further Co/Bi/Sb mother alloy, and then the resulting mother alloy is melted together with Sn, Instead, Sn and Co can be separately melted with the Bi/Sb mother alloy. However, the melting point of Co is about 1480°C, and huge amount of energy is consumed in melting Co. Furthermore, Co can be oxidized during the melting. Therefore, the quality of the final solder alloy is often instable.

In a preferred embodiment, the novel solder alloy is prepared by the process comprising solidifying a melt obtained by melting Bi together with Sb to give the Bi/Sb mother alloy, solidifying a melt obtained by melting Sn together with Co to give a mother alloy of Sn and Co (it is hereinafter referred as a Sn/Co mother alloy), and then solidifying a melt obtained by melting Sn together with the Bi/Sb mother alloy and the Sn/Co mother alloy. The order of preparing the Bi/Sb mother alloy and the Sn/Co mother alloy is critical In the process, either the Bi/Sb mother or the Sn/Co mother alloy can be firstly melted with Sn. Instead, both mother alloys can be simultaneously melted together with Sn. The Sn/Co mother alloy is generally prepared by melting Sn metal together with Co metal. If desired, an alloy having Sn and Co in the amounts different from those in the aimed mother alloy can be mixed. These components can be mixed as solids and then the mixture is melted, or one component can be firstly melted and the remaining components are added into the resulting melt.

In the preferred embodiment, the Sn/Co mother alloy can be formed at about 550°C. Therefore, the novel solder alloy according to the invention can be prepared using lesser energy. Furthermore, Co is not oxidized during the preparation, and thus the stable final solder alloy having the uniform structure and the uniform composition can be obtained.

The novel lead-free alloy obtained as such can be used advantageously for stick-type solders, wire solders, resin-core solders, cream solders (also known as soldering pastes solders by mixing the powders of the alloy with soldering flux), and solder balls for BOA, and can be applied to all of the common soldering technologies, in particular, for hand soldering, reflow soldering, high frequency wave soldering, infrared soldering and vapor-phase soldering.

### [Examples]

The present invention will now be explained in detail by the following examples. The invention is not limited to the examples below.

### (1) Effect of Sb

### A: Preparation of solder alloy

### Example 1:

### Bi, 10 percent by weight-Co, 0.05 percent by weight - Sb, 0.3 percent by weight - Sn (balance) -

Bi metal was melted together with Sb metal, and the resulting melt was solidified to obtain a Bi/Sb mother alloy. Further, Sn metal and Co metal (99:1) were melted together, and the resulting melt was solidified to obtain a Sn/Co mother alloy. Then, Sn metal was melted together with the Bi/Sb mother alloy and the Sn/Co mother alloy, and the resulting melt was solidified to obtain the final lead-free solder alloy.

### Comparative Example 1:

### Bi, 10 wt% - Co.0.05 wt% - Sn (balance)

Bi metal was melted together with Co metal, and the resulting melt was solidified to obtain a Bi/Co mother alloy. Then, Sn metal and the Bi/Co mother alloy was melted together, and the resulting melt was solidified to obtain the lead free solder alloy without Sb.

### B: Characteristic evaluation

### a) Liquefying temperature, solidifying temperature

For the above lead-free soldering alloys in Example 1 and Comparative Example 1, the solidifying temperatures, and the liquefying temperatures were measured using a differential scanning calorimeter with rising temperature of 5°C /min. The results are shown in Table 1.

**Table 1:**

| | Components (percent by weight) | | | | Solidifying Temp(°C) | Liquefying Temp(°C) |
|---|---|---|---|---|---|---|
| | Sn | Bi | Co | Sb | | |
| Example 1 | Balance | 10 | 0.05 | 0.3 | 207-209 | 209.211 |
| Comparative Example 1 | Balance | 10 | 0.05 | - | 203-205 | 206-208 |

As seen from Table 1, both alloys in Example 1 and Comparative Example 1 had lowered liquefying temperatures less than about 210°C and narrow solidification ranges (i.e. the difference between a liquefying temperature and a solidifying temperature) of 2-3°C. The liquefying and solidifying temperatures of the solder alloy in Example 1 are slightly higher than those of the alloy in Comparative Example 1.

### b) Specific gravity

Three samples of each of the alloys in Example 1 and Comparative Example 1 were tested for the specific gravities at 20°C. The results are shown below. The values measured for respective samples did not vary as shown in Table 2. Therefore, it is found that both alloys have uniform compositions.

**Table 2:**

| | Example 1 | | Comparative Example 1 | |
|---|---|---|---|---|
| | Specific gravities | Average | Specific gravities | Average |
| Sample 1 | 7.5 | 7.5 | 7.5 | 7.5 |
| Sample 2 | 7.6 | | 7.5 | |
| Sample 3 | 7.5 | | 7.5 | |

### c) Spreading rate

Three samples of each of the alloys in Example 1 and Comparative Example 1 were tested for the spreading rates according to JIS-Z-3197 8.3.11. About 0.3g of the lead-free alloy in Example 1 or Comparative Example 1 and soldering flux (RMA type according to MIL-F-12266E) were placed on the center of copper foil having the size of 30x30x0.3mm, and then the alloy on the foil was melted at 260°C for about 30 seconds. Then spreading heights were tested with a micrometer. The results are shown below.

As can be seen from Table 3, the alloy in Example 1 has higher spreading rate than the alloy in Comparative Example 1, though the liquefying temperature of the alloy in Example 1 is slightly higher than that of the alloy in Comparative Example 1 (see Table 1).

**Table 3:**

| | Example 1 | | | Comparative Example 1 | | |
|---|---|---|---|---|---|---|
| | Spreading height (mm) | Weight (g) | Spreading rate (%) | Spreading height (mm) | Weight (g) | Spreading rate (%) |
| Sample 1 | 0.988 | 0.3010 | 73.1 | 1.066 | 0.2981 | 70.9 |
| Sample 2 | 0.883 | 0.3001 | 75.9 | 1.042 | 0.2961 | 71.4 |
| Sample 3 | 0.861 | 0.2981 | 76.5 | 1.056 | 0.3010 | 71.2 |
| | Average | | 75.16 | Average | | 71.16 |

### d) Wettability and solderability

The wettability and the solderability were tested according to JIS C 0053. A piece of copper, to which the soldering flux (RMA type according to MIL·F·12256E) was applied, was dipped into a melt of the alloy in Example 1 or Comparative Example 1. The test was carried out under the conditions of bath temperatures of 260°C and 260°C, dipping depth of 3mm, and dipping time of 5 seconds. Then, the zero cross time for estimating the wettability and the maximum wetting force for estimating the solderability were measured. The results are shown in Table 4.

The alloy in Example 1 has shorter zero cross time than the alloy in Comparative Example 1. This shows that the addition of Sb leads to improved wettability. The alloy in Comparative Example 1 has higher maximum wetting force than the all0y in Example 1. However, the maximum wetting forces measured at 260°C were almost equal in both alloys.

**Table 4:**

| Example 1 | | | Comparative Example 1 | | | |
|---|---|---|---|---|---|---|
| Zero cross time (sec) | Maximum wetting force (mN) | | Zero cross time (sec) | | Maximum wetting force (mN) | |
| 250°C 260°C | 250°C | 260°C | 200°C | 260°C | 250°C | 260°C |
| 0.75 0.5 | 2.26 | 3.7 | 0.9 | 0.7 | 3.5 | 3.75 |

### e) Tensile strength and elongation of alloy

The tensile strength was measured for the above lead-free solder alloys in Example 1 and Comparative Example 1 according to JIS Z 3193. The test pieces of respective alloys were drawn at a velocity of 3mm/min according to ASTM. ISO 6892 standards were applied to the thickness of the test pieces. The results are shown in Table 5. The alloy in Example 1 had slightly higher tensile strength than the alloy in Comparative Example 1.

**Table 5:**

| Example 1 | | Comparative Example 1 | |
|---|---|---|---|
| Tensile load (kgf) | Tensile strength (kgf/mm²) | Tensile load (kgf) | Tensile strength (kgf/mm²) |
| 183.13 | 9.30 | 182.10 | 9.22 |

The elongation was measured from the initial length and the length after rupture of the test piece. The results are shown in Table 6. As can be seen in Table 6, the alloy in Example 1 has higher elongation than the alloy in Comparative Example 1. This shows that the alloy comprising Sb according to the invention has improved resistance to the formation of cracks or brakes in the marketplace.

**Table 6:**

| Elongation (%) | |
|---|---|
| Example 1 | Comparative Example 1 |
| 17.05 | 16.41 |

### f) Initial joint strength (tensile strength in practical-use)

Electronic elements were fixed onto a circuit substrate using the alloy in Example 1 or Comparative example 1. Three samples were prepared for respective allays. The sample was drawn at the velocity of 5mm/min by a peel test device fur the test of the initial joint strength of the joint parts. The results are shown in Table 7. As known from Table 7, the alloy in Example 1 had higher initial joint strength than the alloy in Comparative Example 1. This shows that the alloy oomprising Sb according to the invention has improved tensile strength in the marketplace.

**Table 7:**

| | Initial joint strength (kgf) | |
|---|---|---|
| | Example 1 | Comparative Example 1 |
| Sample 1 | 8.58 | 6.96 |
| Sample 2 | 8,79 | 6.27 |
| Sample 3 | 8.01 | 8.87 |
| Average | 8.46 | 6.70 |

### (2) Comparison with other solder alloys.

### A: Preparation

Solder alloys shown in the following Table 8 were prepared.

**Table 8:**

| Alloy | Sn | Pb | Bi | Sb | Co | In | Ag |
|---|---|---|---|---|---|---|---|
| Comparative Example2 | Balance | 87 | | | | | |
| Comparative Example 3 | Balance | | 1 | 1.2 | 2 | 1 | 0.8 |
| Comparative Example 4 | Balance | | 10 | | 0.01 | 3 | |
| Example 2 | Balance | | 10 | 0.1 | 0.01 | | |
| Example 3 | Balance | | 15 | 0.1 | 0.01 | | |
| Example 4 | Balance | | 10 | 0.3 | 0.01 | | |
| Example 6 | Balance | | 10 | 1.5 | 0.05 | | |
| Example 8 | Balance | | 10 | 2 | 0.05 | | |

The alloy in Comparative Example 1 is the conventional Sn-Pb solder alloy. The alloys in Comparative Examples 2 and 3 respectively correspond to alloys described in the above-mentioned prior documents, JP06-344180A and JP08-224689. The wider alloys in Examples 2 to 6 were prepared as described in Example 1, except that the different amounts of Sn, Bi, Sb and Co were used.

### B: Characteristic evaluation for practical use

### a) Solderability

Necessary electronic elements were set on a circuit substrate for an automobile meter and each of cream solders obtained by using the alloys shown in Table 8 was applied to joint parts. The soldering was executed by heating the substrate up to 225°C and cooling it to the room temperature. Then, the electrode surface area covered by the solder was visually evaluated. For the evaluation, the same electronic elements, which were likely to cause defective soldering, were selected. The results are shown in Table 9.

**Table 9:**

| Alloy | Evaluation |
|---|---|
| Comparative Example 2 | very good |
| Comparative Example 3 | not good |
| Comparative Example 4 | not good |
| Example 2 | good |
| Example 3 | very good |
| Example 4 | very good |
| Example 5 | good |
| Example 6 | good |
| very good: more than about 75% of the surface area was covered by the solder, good: about 50 to 75 % of the surface area was covered by the solder. not good; less than about 60 % of the surface area was covered by the solder. | |

As known from Table 9, the novel solder alloys in Example 2 to 6 have better solderability, compared to the solder alloys in Comparative Examples 3 and 4. In particular, the alloys in Examples 3 and 4 have superior solderability as well as the conventional Sn-Pb solder alloy in Comparative Example 2.

### b) Thermal shock resistance

Chip resistors having an electrode coated with Sn were fixed on circuit substrates using the cream solders prepared from the solder alloys in Examples 2 to 6 and the Sn-Pb alloy in Comparative Example 2. The resulting substrates were tested under the following conditions.
Apparatus: ESPEC TSA-70L
Thermal shock: - 40°C, 30min ⇔ 90°C, 30min
Repeat cycles: 1000 cycles

In the substrate including the conventional Sn-Pb solder alloy, cracks were observed in the soldered parts after 500 cycles of the thermal shock. On the contrary, cracks were not observed in the substrates including the solder alloys in Examples 2 to 6 after 1000 cycles of the thermal shock.

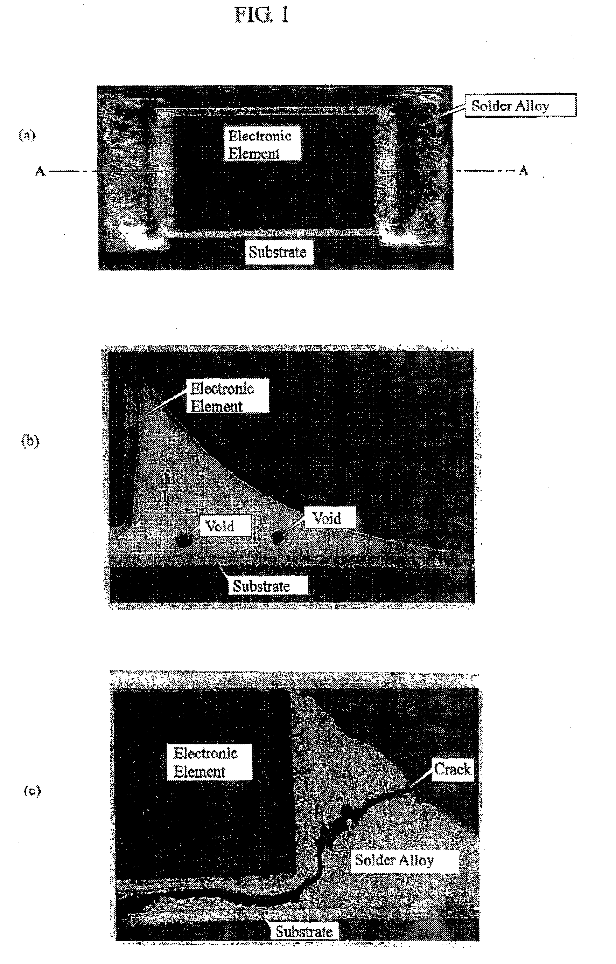

The above-mentioned results can be seen in photographs in Fig. 1. Fig. 1 (a) is a photograph of the substrate having the chip resistor soldered. Fig. 1 (b) is a photograph of a cross-section taken on line A-A of Fib. 1(a), on the substrate having the chip resistor fixed using the lead-free solder alloy in Example 3 which experienced 1000 cycles of the thermal shock. Cracks were not observed in the soldered part in spite of the presence of two voids, as known from the photograph.

Fig. 1 (c) is a photograph of a cross section taken on line A-A of Fig. 1(a), on the substrate having the chip resistor fixed using the conventional Sn-Pb solder alloy in Comparative Example 2 which experienced 500 cycles of the thermal shock. The cracks of various sizes were observed as blown from the photograph. It is considered that the cracks were formed because large stress caused by the difference between the thermal expansion coefficients of the chip resistor and the circuit substrate concentrated on the soldered parts.

As known from the test results, the solder alloy according to the invention has improved thermal shock resistance, compared to the conventional Sn-Pb solder alloy.

### c) Solderability to various electronic elements

Chip resistors (size; 60 µm × 30 µm: electrode coated with Sn), electric elements having three terminals (electrode coated with Sn-Pb) and MELF resistors (electrode coated with Sn-Fb) were soldered using each of the cream solder obtained from the solder alloys in Example 3 and the Sn-Pb alloy in Comparative Example 2.

Both alloys have good wettability to the chip resistors. However, the followings were observed in soldering the elements having three terminals and the MELF resistors.

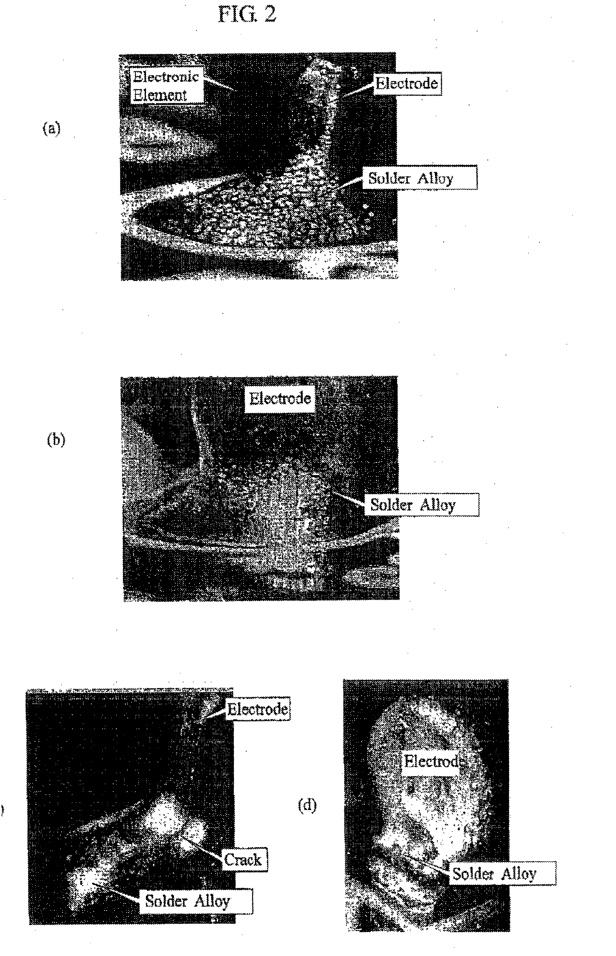

Fig.2 (a) is a photograph of a soldered part in the substrate including the element having 3 terminals fixed using the solder alloy in Example 3. Fig.2 (b) is a photograph of a soldered part in the substrate including the MELF resistor fixed using the solder alloy in Example 3. As known from the photographs, the novel alloy has good solderbility to both electronic elements.

Fig.2 (c) is a photograph of a soldered part in the substrate including the element having 3 terminals fixed using the Sn-Fb solder alloy in Comparative Example 2. Fig.2 (d) is a photograph of a soldered part in the substrate including the MELF resistor fixed using the Sn-Pb solder alloy in Comparative Example 2. As known from the photography the Sb·Pb alloy did not have good solderability to these electronic elements. In soldering the element having 3 therminals, the significant oxidation of the soldered part was observed. In soldering the MELF resistor, the soldered part and the solder ally was covered with a gas generated from the coat of Sn-Pb.

Therefore, the solder alloy according to the invention can be applied to various electronic elements, compared to the conventional Sn-Pb alloy.

Tthe solder alloy according to the invention have liquefying temperature lower than about 210°C and improved wettability. The novel alloy also has improved spreading rate and tensile strength. Furthermore, the novel solder alloy has uniform composition and structure, and does not include alloy phases having too low melting points. In addition, the novel alloy melted can solidify rapidly, because the alloy has solidifying temperature almost equal to liquefying temperature. Furthermore, the solder alloy according to the invention has improved thermal shock resistance and is inexpensive because it does not include costly Cu or Ag.

The solder alloy according to the invention displays improved performance in practical characteristics and does not require particular equipments to solder at high temperatures in a working environment of Na. Therefore, the novel alloy can easily replace the conventional Sn-Pb alloy.

## Claims

1. A lead-free solder alloy comprising:
1 to 16 percent by weight of Bi;
0.01 to 2 percent by weight of Sb;
0.001 to 2 percent by weight of Co; and
the balance percent by weight of Sn, so as to malse the individual amounts of Bi, Sb, Co and Sn summing up to 100% by weight, Sb being substantially present as a solid solution with Bi.

2. The lead-free solder alloy as claimed in claim 1,wherein 10 to 15 percent by weight of Bi, 0.1 to 2 percent by weight of Sb, and 0.01 to 0.05 percent by weight of Co are included.

3. A process of preparing a lead-free solder alloy as claimed as Claims 1 or 2, comprising:
solidifying a melt obtained by melting Bi together with Sb to give a mother alloy of Bi and Sb; and
solidifying a melt obtained by melting the mother alloy of Bi and Sb together with Sn and Co.

4. A process of preparing a lead free solder alloy as claimed in Claims 1 or 2, comprising:
solidifying a melt obtained by melting Bi together with Sb to give a mother alloy of Bi and Sb;
solidifying a melt obtained by melting Sn together with Co to give a mother alloy of Sn and Co; and
solidifying a melt obtained by melting Sn together with the mother alloy of Bi and Sb and the mother alloy of Sn and Co.
